# EUROPEAN PATENT SPECIFICATION

(11) **EP 2 116 123 B1**
(45) Date of publication and mention of the grant of the patent: **10.11.2010**
(21) Application number: 09159310.3
(22) Date of filing: 04.05.2009
(51) Int. Cl.: A01C 23/00, A01B 73/02

(54) **Collapsible Frame for an Agricultural Implement**
Faltbarer Rahmen für ein landwirtschaftliches Gerät
Cadre pliable pour outil agricole

(30) Priority: 06.05.2008 DK 200800644
(43) Date of publication of application: 11.11.2009
(73) Proprietor: Samson Agro A/S, 8800 Viborg (DK)
(72) Inventor: Kjær, Erling, 7480, Vildbjerg (DK)
(74) Representative: Nielsen, Leif

(56) References cited:
- EP-A- 1 210 855
- DE-A1- 4 303 101
- GB-A- 2 139 063
- US-A1- 2002 017 389

## Description

### Field of the Invention

The present invention concerns a collapsible frame for an agricultural implement, in particular a liquid fertiliser applicator, including five articulated frame sections suspended on an agricultural vehicle.

The invention also concerns a liquid fertiliser applicator with a fertiliser tank and provided with wheels for towing, the applicator including such a collapsible frame. The liquid fertiliser applicator may be a trailer-like unit towed by a tractor or be a self propelled vehicle.

### Background of the Invention

Collapsible frames for agricultural implements are well known in the art. Such frames provides for switching the implement between a working mode and a transport mode. In the working or active mode, the frame is extended transversely to the driving direction of the vehicle at a width suitable for covering a wide area when working the soil. In the transport mode, the frame is collapsed for keeping the dimensional limits within the allowable width for vehicles driving on public roads; the allowable limit is typically 3 metres wide and 4 metres high.

In modem plant production farming, there is a trend towards using permanent driving tracks as soil compression between the permanent tracks is thereby avoided, in that way achieving an increased yield of the crop, typically 5 - 15% more. At the same time, machine and labour costs are reduced.

The use of permanent driving tracks within the individual growing season has been current procedure in the growing of grain crops where the driving tracks are marked in connection with sowing the crop. Permanent tracks are also coming into wider use due to the propagation of GPS navigation technology which also enables using the tracks in successive growing seasons and by permanent crops like grass fields. In order to utilise the tracks in the best way, there is a demand for a greater reach of the applied agricultural implements to the sides of the permanent tracks.

For liquid fertiliser applicators, the maximum working width of lift-suspended systems is limited, as the prior art constructions become unstable by larger widths and unable to withstand the moments of force acting on the construction during the application of e.g. liquid manure. Such a system is disclosed in US 4,151,886, showing a folding tool bar for various agricultural implements with five articulated, interconnected bar sections. Also, the rear-mounted systems on towed fertiliser applicators become so heavy that they have the tendency of de-stabilising the tractor-applicator system as the weight at the rear of the applicator relieves the weight on the drawbar and thereby on the rear drive wheels of the tractor, consequently reducing the grip between drive wheels of the tractor and the ground.

Published patent application US 2002/0017389 A1 discloses a winged implement with five articulated frame sections suspended on a towed agricultural vehicle. The implement and the vehicle together form a liquid fertiliser applicator. A central first frame section is mounted at a horizontal position with two adjacent second frame sections linked to the first frame section at respective ends thereof such that each adjacent frame section may be pivoted between a horizontal working position substantially in line with the central first frame section and an upright transport position at an angle to the central frame section. Two extreme third frame sections are arranged such as to assume a horizontal working position substantially in line or in parallel with the first and second frame sections and a transport position substantially along the vehicle, respectively. By this implement according to prior art, the extreme third sections of the collapsible frame are linked and connected pivoting to the second frame sections. When collapsing, the second frame sections are pivoted to a upright position while the third frame sections are pivoted at right angles to the second second sections and along both sides of the plane of symmetry of the vehicle.

The implement according to US 2002/0017389 A1 is mounted in front of the liquid fertiliser tank on the drawbar for the tractor. This design may provide a wide working area. However, the reach of the winged implement is limited, since increasing the span will imply a very heavy construction. Also, if applying the applicator with a pressure on the soil, the resulting force upwards in front of the point of gravity of the applicator will cause less weight to be transferred to the driving rear wheels of the tractor, thus entailing a lighter and hence inferior engagement between the ground and the drive wheels.

### Object of the Invention

The object of the invention is to provide a collapsible frame with articulated frame sections as indicated in the introduction where the structural problems of the prior art are counteracted and such that a greater working width than hitherto possible can be obtained.

### Description of the Invention

The collapsible frame according to the invention is peculiar in that it includes support members which are pivotably connected directly or indirectly to the vehicle independently of the first and second frame sections and at opposing sides of the vehicle, that the third frame sections are connected articulating to each their support member such that each third frame section may pivot relative to the adjoining support member in order to assume working and the transport positions, respectively, and that the support members are hinged in relation to the vehicle about an axis extending largely in the driving direction of the vehicle.

The liquid fertiliser applicator according to the invention is peculiar in that the collapsible frame further includes support members which are pivotably connected directly or indirectly to the applicator independently of the first and second frame sections and at opposing sides of the vehicle, that the third frame sections are connected articulating to each their support member such that each third frame section may pivot relative to the adjoining support member in order to assume working and the transport positions, respectively, and that the support members are hinged in relation to the vehicle about an axis extending largely in the driving direction of the applicator.

The extreme third frame sections are thus carried by separate support members attached directly to the vehicle, this being a self-propelled or a towed agricultural implement. By structurally separating the extreme third frame sections from the first and second sections and providing separate support members for the third frame sections, the collapsible frame can be made lighter in total, and a strong and heavy structure for the second frame sections for absorbing the moments of force from the third frame sections is therefore unnecessary. The collapsible frame according to the invention thus provides possibility of increasing the range and the reach to the sides of the agricultural implement carried by the frame. Also, the separate suspension of the outer third frame section enables a working mode where the third frame sections are folded to the transport position while the first and second frame sections are in working position for working a narrower path.

In a simple, preferred embodiment of the invention, each support member is designed as a structure comprising welded bars mounted by first hinge means at two points at a side of the vehicle, and that the associated third frame section connected by second hinge means to the support member at an external corner of the structure. The structure with welded bars can thus be made light and adapted to various agricultural vehicles, in particular towed liquid fertiliser applicators.

In the liquid fertiliser applicator according to the invention, each support member may be connected by to the applicator at two hinge means at separate points, one point disposed the rear of the applicator between the first frame section and the fertiliser tank, thus providing a simple arrangement of the support members. On a towed applicator with several large wheel pairs being the lateral limit of the applicator, the support member can be attached in front of and at the rear of the wheels at each side, thus pivoting to the upright position above and around the wheels. In the transport position, the support member is thus collapsed to the side of the vehicle within the periphery constituted by the wheels, and thus not protruding outside the basic width of the vehicle.

It is preferred that a hydraulic cylinder is arranged between each third frame section and the adjacent support member for providing pivoting movement of the third frame section in relation to the support member.

For pivoting each support member in relation to the vehicle, a hydraulic cylinder can be arranged at one of the hinge means, the hydraulic cylinder mounted at the hinge means at one end and with its other end, preferably at the piston rod, to a common joint between two articulated bars that are arranged such that the other end of one bar is connected to a fixed part of the collapsible frame or the agricultural vehicle and the other end of the other bar is connected to the pivotable support member. The articulated bars and the cylinder are preferred arranged above the part of the support member in the working position, and extending the cylinder will thus press the common joint of the bars away from the hinge point of the support member, thereby pivoting the support member upwards to the upright transport position. Retracting the cylinder will cause lowering the support member to the horizontal working position, where the third frame sections can be pivoted in line with the second frame sections. An additional advantage of this arrangement is that further retraction of the cylinder will cause the implement borne by the third frame sections to be depressed into the soil, something which may be advantageous to the procedure of tilling or applying fertiliser into the soil, in particular if the soil is hard and uneven. Furthermore, this embodiment with articulated bars also provides the possibility of alleviating the pressure the pressing force by the implement on the ground in order to avoid that the implement goes too deep in the soil. This may be combined with a control system provided with a depth gauge that continuously measures how deep the implement works below the surface of the soil, and the control system then adjusts the working depth of the implement by lifting or lowering the frame sections.

### Description of the Drawing

Preferred embodiments of the invention will be described in the following with reference to the drawings, in which:
- Fig. 1: shows a schematic side view of a liquid fertiliser applicator with a collapsible frame in collapsed transport condition;
- Fig. 2: shows the same as Fig. 1 but in a view from above and with the applicator frame in unfolded working condition at one side; and
- Fig. 3: shows the same as Fig.1 but in a view from behind with a preferred link ar- rangement for pivoting support members.

### Detailed Description of Example Embodiments

The collapsible frame according to the invention can be applied to various winged tools for agricultural purposes, whether suspended behind a tractor or mounted on other agricultural vehicles for harrowing the soil, distributing pesticides or fertiliser or for other purposes.

In the shown embodiment, a collapsible frame consisting of five frame sections 1, 3, 5 is mounted at the rear of a liquid fertiliser applicator 7 which is towed by a tractor 9. The frame sections 1, 3, 5 are here fitted with applicator means 11 comprising hoses, nozzles and soil engaging discs according to prior art. Other soil working or applicator devices may be attached to the frame sections 1, 3, 5 for other purposes, e.g. harrowing the soil.

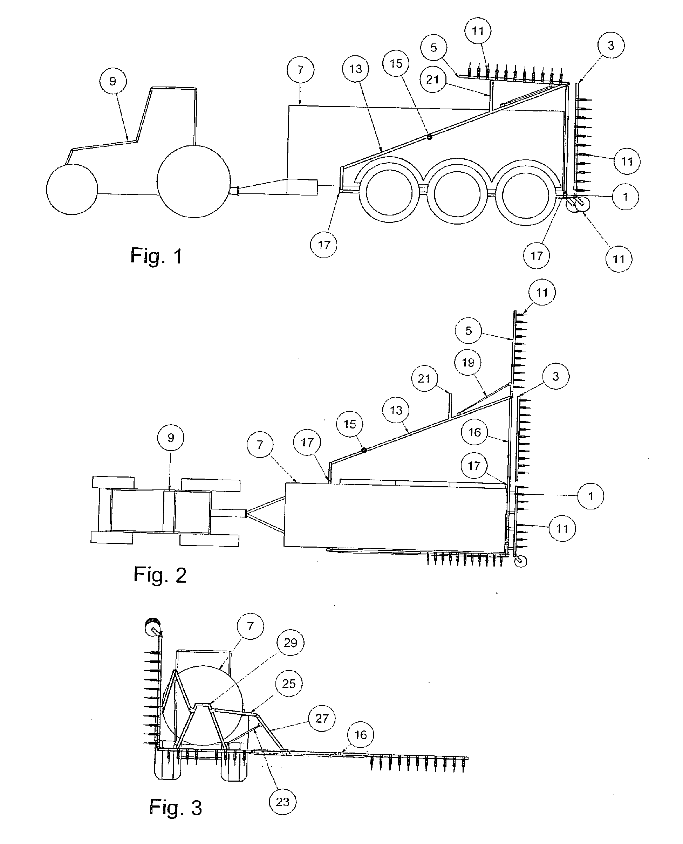

The first and second frame sections 1, 3 have a design according to prior art. The first frame section 1 is always suspended in horizontal position but may be lifted and lowered. The two second frame sections 3 are pivotably suspended so as to assume a substantially vertical transport position, see Fig. 1, and a horizontal working position, see the section 3 in the upper half of Fig. 2. The pivoting action of the sections 3 is provided by not shown hydraulic cylinders.

The new feature of the invention is the provision of two separate support members 13 that are mounted along respective sides of the towed applicator 7. The support members 13 include bars 15, 16 that are pivotably suspended at points 17 on the applicator 7 by hinge connections at 17. Each support member 13 may be pivoted between an upright transport position, see Fig. 1, and a working position, see upper half of Fig. 2.

The pivoting action of the support members 13 is illustrated by the rear view on Fig. 3 on which the right second section 3 has been omitted. A cylinder 23 is connected to articulated rods 25, 27 which in turn are pivotably connected to the fixed frame 29 of the applicator 7 and a bar 16 of the support member 13, respectively. By extending the cylinder 23, the bar 16 and thereby the member 13 is pivoted upwards, and by retracting cylinder 23, the bar 15 and member 13 are pivoted downwards.

The third frame sections 5 are suspended pivotably on respective support members 13, preferably at a corner thereof, e.g. at the joint between the bars 15 and 16. Each frame section 5 is thus able to perform a pivoting in parallel with the plane of the associated support member 13. The pivoting action is provided by a hydraulic cylinder 19. In the rest and transport position, the frame sections 5 may abut on ends of rod-shaped supports 21 projecting out from the support member 13.

There are several advantages of the inventive collapsible frame according to the invention.

The third frame sections 5 extend the reach of the agricultural implement, e.g. a liquid fertiliser applicator, beyond the options of prior art collapsible frames as the second frame sections 3 are not to carry the weight of the third frame sections 5 and therefore do not have to withstand the added moment of force imparted by the third frame sections 5. The weight of the third frame sections 5 is carried only by the support members 13 which are not supporting other frame sections. The total weight of the collapsible frame at the rear of the liquid fertiliser applicator is therefore reduced, consequently reducing the effect of the frame weight on the drawbar to the tractor. In addition, in the shown transport position the weight of the third frame sections 5 will contribute to move the centre of gravity of the collapsible frame as such forward, thus reducing the unwanted influence of the weight at the rear of the vehicle.

The combination of linkage by the rods 25, 27 and the arrangement of the cylinder 23 provides the possibility of using the cylinder 23 as a means for adding ground contact pressure to the tools 11 working the soil. By retracting the cylinder 23, the bar 16 and thereby the support member 13 is forced down against the soil.

Other embodiments of the collapsible frame are possible within the scope of the claims. For example, each third frame section may either be divided into two articulated subsections. Such a feature could be advantageous for providing a flexibility in the third sections in order to follow the contour of the soil during operation, for providing a further a further collapsing of the third frame section in the transport position, and thus further extending the reach of the third sections, or for making the reach adaptable by folding up the extreme subsection during operation.

## Claims

1. A collapsible frame for an agricultural implement mounted on an agricultural vehicle, in particular a liquid fertiliser applicator (7), including five articulated frame sections (1,3,5) suspended on the agricultural vehicle (7), wherein a central first frame section (1) is mounted at a horizontal position with two adjacent second frame sections (3) linked to the first frame section (1) at respective ends thereof such that each adjacent frame section (1,3) may be pivoted between a horizontal working position substantially in line with the central first frame section (1) and an upright transport position at an angle to the central frame section (1), where two third frame sections (5) are arranged such as to assume a horizontal working position substantially in line with the first and second frame sections (1,3) and a transport position substantially along the vehicle (7), respectively **characterised in that** the collapsible frame further includes support members (13) which are pivotably connected directly or indirectly to the vehicle (7) independently of the first and second frame sections (1,3) and at opposing sides of the vehicle (7), that the third frame sections (5) are connected articulating to each their support member (13) such that each third frame section (5) may pivot relative to the adjoining support member (13) in order to assume working and the transport positions, respectively, and that the support members (13) are hinged in relation to the vehicle (7) about an axis extending substantially in the driving direction of the vehicle (7).

2. Collapsible frame according to claim 1, wherein each support member (13) is designed as a structure comprising welded bars (15,16) mounted by first hinge means at two points (17) at a side of the vehicle (7), and that the associated third frame section (5) connected by second hinge means to the support member (13) at an external corner of the structure.

3. Collapsible frame according to claim 1 or 2, wherein a hydraulic cylinder (19) is arranged between each third frame section (5) and the adjacent support member (13) for providing pivoting movement of the third frame section (5) in relation to the support member (13).

4. Collapsible frame according to any preceding claim, wherein each support member (13) may be pivoted in relation to the vehicle (7) by means of a hydraulic cylinder (19) arranged at one of the hinge means, the hydraulic cylinder (19) mounted at the hinge means at one end and with its other end, preferably at the piston rod, to a common joint between two articulated bars (15,16) that are arranged such that the other end of one bar is connected to a fixed part of the collapsible frame and the other end of the other bar is connected to the pivotable support member (13).

5. A liquid fertiliser applicator (7) having a fertiliser tank and provided with wheels for towing, the applicator including a collapsible frame, the frame carrying means (11) for discharging and applying liquid fertiliser to the soil, the frame including five articulated frame sections (1,3,5) suspended on the applicator (7), wherein a central first frame section (1) is mounted at a horizontal position with two adjacent second frame sections (3) linked to the first frame section (1) at respective ends thereof such that each adjacent frame section (1,3) may be pivoted between a horizontal working position substantially in line with the central first frame section (1) and an upright transport position at an angle to the central frame section (1), where two third frame sections (5) are arranged such as to assume a horizontal working position substantially in line or in parallel with the first and second frame sections (1,3) and a transport position substantially along the applicator (7), respectively, **characterised in that** the collapsible frame further includes support members (13) which are pivotably connected directly or indirectly to the applicator (7) independently of the first and second frame sections (1,3) and at opposing sides of the vehicle (7), that the third frame sections (5) are connected articulating to each their support member (13) such that each third frame section (5) may pivot relative to the adjoining support member (13) in order to assume working and the transport positions, respectively, and that the support members (13) are hinged in relation to the vehicle (7) about an axis extending substantially in the driving direction of the applicator (7).

6. Liquid fertiliser applicator according to claim 5, wherein each support member (13) is connected by to the applicator (7) at two hinge means at separate points, one point disposed the rear of the applicator (7) between the first frame section (1) and the fertiliser tank.

## Patentansprüche

1. Zusammenklappbarer Rahmen für ein landwirtschaftliches Gerät, das an einem landwirtschaftlichen Fahrzeug montiert ist, insbesondere eine Flüssigdünger-Aufbringeinrichtung (7), der fünf angelenkte Rahmenabschnitte (1, 3, 5) aufweist, die am landwirtschaftlichen Fahrzeug (7) aufgehängt sind, wobei ein mittlerer Rahmenabschnitt (1) an einer horizontalen Position montiert ist, während zwei benachbarte zweite Rahmenabschnitte (3) am ersten Rahmenabschnitt (1) an jeweiligen Enden hiervon verbunden sind, derart, dass jeder benachbarte Abschnitt (1, 3) zwischen einer horizontalen Arbeitsposition, die im Wesentlichen in einer Linie mit dem mittleren ersten Rahmenabschnitt (1) verläuft, und einer aufrechten Transportposition unter einem Winkel zu dem mittleren Rahmenabschnitt (1) geschwenkt werden kann, wobei zwei dritte Rahmenabschnitte (5) in der Weise angeordnet sind, dass sie eine horizontale Arbeitsposition einnehmen, die im Wesentlichen in einer Linie mit dem ersten und dem zweiten Rahmenabschnitt (1, 3) verläuft, und eine Transportposition einnehmen, die im Wesentlichen in Längsrichtung des Fahrzeugs (7) orientiert ist, **dadurch gekennzeichnet, dass** der zusammenklappbare Rahmen ferner Unterstützungselemente (13) enthält, die am Fahrzeug (7) unabhängig von dem ersten und dem zweiten Rahmenabschnitt (1, 3) und auf gegenüberliegenden Seiten des Fahrzeugs (7) direkt oder indirekt schwenkbar verbunden sind, dass die dritten Rahmenabschnitte (5) gelenkig mit jedem ihrer Unterstützungselemente (13) verbunden sind, derart, dass jeder dritte Rahmenabschnitt (5) in Bezug auf das benachbarte Unterstützungselement (13) schwenken kann, um die Arbeits- bzw. die Transportposition einzunehmen, und dass die Unterstützungselemente (13) in Bezug auf das Fahrzeug (7) um eine Achse drehbar sind, die im Wesentlichen in der Fahrtrichtung des Fahrzeugs (7) verläuft.

2. Zusammenklappbarer Rahmen nach Anspruch 1, wobei jedes Unterstützungselement (13) als eine Struktur entworfen ist, die verschweißte Stäbe (15, 16) aufweist, die durch erste Scharniermittel an zwei Punkten (17) auf einer Seite des Fahrzeugs (7) montiert sind, und dass der zugeordnete dritte Rahmenabschnitt (5) durch zweite Scharniermittel mit dem Unterstützungselement (13) an einer äußeren Ecke der Struktur verbunden ist.

3. Zusammenklappbarer Rahmen nach Anspruch 1 oder 2, wobei zwischen jedem dritten Rahmenabschnitt (5) und dem benachbarten Unterstützungselement (13) ein Hydraulikzylinder (19) angeordnet ist, um eine Schwenkbewegung des dritten Rahmenabschnitts (15) in Bezug auf das Unterstützungselement (13) zu schaffen.

4. Zusammenklappbarer Rahmen nach einem vorhergehenden Anspruch, wobei jedes Unterstützungselement (13) in Bezug auf das Fahrzeug (7) mittels eines Hydraulikzylinders (19), der an einem der Scharniermittel angeordnet ist, geschwenkt werden kann, wobei der Hydraulikzylinder (19) an dem Scharniermittel an einem Ende montiert ist, während sein anderes Ende, vorzugsweise an der Kolbenstange, mit einer gemeinsamen Verbindung zwischen zwei angelenkten Stäben (15, 16) verbunden ist, die in der Weise angeordnet sind, dass das andere Ende eines Stabs mit einem festen Teil des zusammenklappbaren Rahmens verbunden ist und das andere Ende des anderen Stabs mit dem schwenkbaren Unterstützungselement (13) verbunden ist.

5. Flüssigdünger-Aufbringeinrichtung (7), die einen Düngertank besitzt und mit Rädern zum Schleppen versehen ist, wobei die Aufbringeinrichtung einen zusammenklappbaren Rahmen enthält, wobei der Rahmen Mittel (11) trägt, um Flüssigdünger abzugeben und auf den Boden aufzubringen, wobei der Rahmen fünf angelenkte Rahmenabschnitte (1, 3, 5) aufweist, die an der Aufbringeinrichtung (7) aufgehängt sind, wobei ein mittlerer erster Rahmenabschnitt (1) in einer horizontalen Position montiert ist, während zwei benachbarte zweite Rahmenabschnitte (3) mit dem ersten Rahmenabschnitt (1) an jeweiligen Enden hiervon verbunden sind, so dass jeder benachbarte Rahmenabschnitt (1, 3) zwischen einer horizontalen Arbeitsposition, die im Wesentlichen in einer Linie mit dem mittleren ersten Rahmenabschnitt (1) verlüft, und einer aufrechten Transportposition unter einem Winkel zu dem mittleren Rahmenabschnitt (1) geschwenkt werden kann, wobei zwei dritte Rahmenabschnitte (5) in der Weise angeordnet sind, dass sie eine horizontale Arbeitsposition, die im Wesentlichen in einer Linie mit oder parallel zu dem ersten und dem zweiten Rahmenabschnitt (1, 3) verläuft, und eine Transportposition, die im Wesentlichen in Längsrichtung der Aufbringeinrichtung (7) verläuft, annehmen können, **dadurch gekennzeichnet, dass** der zusammenklappbare Rahmen ferner Unterstützungselemente (13) enthält, die an der Aufbringeinrichtung (7) unabhängig von dem ersten und dem zweiten Rahmenabschnitt (1, 3) und auf gegenüberliegenden Seiten des Fahrzeugs (7) direkt oder indirekt schwenkbar verbunden sind, dass die dritten Rahmenabschnitte (5) gelenkig mit jedem ihrer Unterstützungselemente (13) verbunden sind, derart, dass jeder dritte Rahmenabschnitt (5) in Bezug auf das benachbarte Unterstützungselement (13) schwenken kann, um die Arbeits- bzw. die Transportposition einzunehmen, und dass die Unterstützungselemente (13) in Bezug auf das Fahrzeug (7) um eine Achse drehbar sind, die im Wesentlichen in der Antriebsrichtung der Aufbringeinrichtung (7) verläuft.

6. Flüssigdünger-Aufbringeinrichtung nach Anspruch 5, wobei jedes Unterstützungselement (13) mit der Aufbringeinrichtung (7) an zwei Gelenkmitteln an getrennten Punkten verbunden ist, wobei ein Punkt an der Rückseite der Aufbringeinrichtung (7) zwischen dem ersten Rahmenabschnitt (1) und dem Düngertank angeordnet ist.

## Revendications

1. Un cadre pliable pour un outil agricole monté sur un véhicule agricole, particulièrement un applicateur d'engrais liquide (7), comprenant cinq sections de cadre articulées (1, 3, 5) suspendues sur le véhicule agricole (7), dans lequel une première section de cadre centrale (1) est montée à une position horizontale avec deux secondes sections de cadre adjacentes (3) liées à la première section de cadre (1) dans les extrémités respectives de cela de sorte que chaque section de cadre adjacente (1, 3) peut être pivotée entre une position de travail horizontale substantiellement en ligne avec la première section de cadre centrale (1) et une position de transport verticale à une angle par rapport à la section de cadre centrale (1), deux troisième sections de cadre (5) sont aménagées, respectivement, de façon à prendre une position de travail horizontale substantiellement en ligne avec la première et la seconde sections de cadre (1, 3) et une position de transport substantiellement le long du véhicule (7), **caractérisé en ce que** le cadre pliable comprend encore des éléments de suppport (13) qui sont directement ou indirectement reliés de façon pivotante au véhicule (7) indépendamment de la première et la seconde sections de cadre (1, 3) et sur les côtés opposés du véhicule (7), que les troisième sections de cadre (5) sont reliées de façon articulée à chaque de leur élément de support (13) de sorte que chaque troisième section de cadre (5) peut pivoter par rapport à l'élément de support adjacent (13) afin d'entreprendre le travail et les positions de transport, respectivement, et que les éléments de support (13) sont, par rapport au véhicule (7), articulés autour d'un axe s'étendant substantiellement dans le sens de marche du véhicule (7).

2. Cadre pliable selon la revendication 1, dans lequel chaque élément de support (13) est façonné comme une construction comprenant des barres soudées (15, 16) montées par des premiers moyens de charnière à deux points (17) sur un côté du véhicule (7), et que la troisième section de cadre associée (5) est reliée par des seconds moyens de charnière à l'élément de support (13) à un coin externe de la construction.

3. Cadre pliable selon la revendication 1 ou 2, dans lequel un vérin hydraulique (19) est aménagé entre chaque troisième section de cadre (5) et l'élément de support adjacent (13) afin de réaliser un mouvement pivotant de la troisième section de cadre (15) par rapport à l'élément de support (13).

4. Cadre pliable selon l'une quelconque des revendications précédentes, dans lequel chaque élément de support (13) peut être pivoté par rapport au véhicule (7) au moyen d'un vérin hydraulique (19) aménagé sur l'un des moyens de charnière, le vérin hydraulique (19) est monté aux moyens de charnière sur une extrémité et avec son autre extrémité, de préférence à la tige de piston, à une articulation commune entre deux barres articulées (15, 16) aménagées de telle façon que l'autre extrémité d'une barre est reliée à une partie fixe du cadre pliable et l'autre éxtrémité de l'autre barre est reliée à l'élément de support pivotant (13).

5. Un applicateur d'engrais liquide (7) ayant un réservoir d'engrais et pourvu de roues pour le remorquage, l'applicateur comprenant un cadre pliable, le cadre portant des moyens (11) pour décharger et appliquer de l'engrais liquide au sol, le cadre comprenant cinq sections de cadre articulées (1, 3, 5) suspendues sur l'applicateur (7), dans lequel une première section de cadre centrale (1) est montée à une position horizontale avec deux secondes sections de cadre adjacentes (3) liées à la première section de cadre (1) aux extrémités respectives de cela ainsi que chaque section de cadre adjacente (1, 3) peut être pivotée entre une position de travail horizontale substantiellement en ligne avec la première section centrale (1) et une position de transport latérale à une angle par rapport à la section de cadre centrale (1), deux troisième sections de cadre (5) sont aménagées, respectivement, de façon à prendre une position de travail horizontale substantiellement en ligne ou en parallèle avec la première et la seconde sections de cadre (1, 3) et une position de transport substantiellement le long de l'applicateur (7), respectivement, **caractérisé en ce que** le cadre pliable comprend encore des éléments de suppport (13) qui sont reliés de façon pivotant directement ou indirectement à l'applicateur (7) indépendant de la première et la seconde sections de cadre (1, 3) et sur les côtés opposés du véhicule (7), que les troisième sections de cadre (5) sont reliées de façon articulée à chaque de leur élément de support (13) ainsi que chaque troisième section de cadre (5) peut pivoter par rapport à l'élément de support adjacent (13) afin d'entreprendre les positions de travail et de transport, respectivement, et que les éléments de support (13) sont, par rapport au véhicule (7), articulés autour d'un axe s'étendant substantiellement dans le sens de marche de l'applicateur (7).

6. Applicateur d'engrais liquide selon la revendication 5, dans lequel chaque élément de support (13) est relié à l'applicateur (7) sur deux moyens de charnière à des points séparés (17), un point disposé à l'arrière de l'applicateur (7) entre la première section de cadre (1) et le réservoir d'engrais.
